# EUROPEAN PATENT APPLICATION

(11) **EP 4 350 457 A1**
(43) Date of publication of application: **10.04.2024**
(21) Application number: 22815165.0
(22) Date of filing: 27.05.2022
(51) Int. Cl.: G05D 1/02

(54) **SELF-MOVING DEVICE, CONTROL METHOD FOR AVOIDING OBSTACLES, AND STORAGE MEDIUM**

(30) Priority: 31.05.2021 CN 202110604368
(71) Applicant: Positec Power Tools (Suzhou) Co., Ltd., Suzhou, Jiangsu 215123 (CN)
(72) Inventor: PAOLO, Andriolo, 36100 Vicenza (IT); EMANUEL, Conti, 36100 Vicenza (IT); DAVIDE, Dalfra, 36100 Vicenza (IT)
(74) Representative: Kilburn & Strode LLP
(86) International application number: PCT/CN2022/095490
(87) International publication number: WO 2022/253119

(57) **Abstract**

The present disclosure relates to a self-moving device, a control method for avoiding obstacles, and a storage medium. In an embodiment, a distance to an obstacle can be determined through the self-moving device. The controller can pre-adjust the self-moving device to deflect by a certain angle to move before the distance between the self-moving device and the obstacle reaches a normal turning distance. When the normal turning distance is reached, the self-moving device is then controlled to turn. In this way, in this solution, since the self-moving device pre-deflects by a certain angle and moves before normal turning, the obstacle can be avoided in time, effectively ensuring the safety of the obstacle and the self-moving device.

## Description

### Technical Field

The present disclosure relates to the field of data processing technologies of self-moving devices, and in particular, to a self-moving device, a control method for avoiding obstacles, and a storage medium.

### BACKGROUND

With the development of science and technology, more and more automatic processing devices enter people's life. For example, an automatic lawn mower, an automatic sweeping robot, an automatic delivery machine, and the like. These self-moving devices bring great convenience to people's production and life.

These self-moving devices usually operate according to a set route or a set working manner. If encountering an obstacle during operation, a self-moving device needs to identify and avoid the obstacle. Currently, a commonly used obstacle avoidance method is mainly to mount an ultrasonic sensor on the self-moving device and use the ultrasonic sensor to emit and receive an ultrasonic signal to identify the obstacle. When the self-moving device approaches the obstacle, a controller on the self-moving device controls the self-moving device to turn to avoid the obstacle. In some operating scenarios, an operating environment is complex, which often leads to untimely avoidance of the self-moving device, causing damage to the obstacle or the self-moving device.

Therefore, there is an urgent need for a solution that can make the self-moving device avoid the obstacle more effectively and in a timely manner.

### SUMMARY

The present disclosure provides a self-moving device, a control method for avoiding obstacles, and a storage medium, which can perform a slight deflection in advance, so that an obstacle can be avoided more safely and reliably, and the safety of the obstacle and the self-moving device is ensured. Technical solutions of the present disclosure are as follows.

According to an aspect of embodiments of the present disclosure, a self-moving device is provided, including:
a main body; and
a controller, the controller being disposed in the main body, and the controller being configured to: determine a distance between the self-moving device and an obstacle; when the distance reaches a first trigger threshold, send a pre-adjustment signal, where the pre-adjustment signal is used for controlling the mobile device to deflect by a pre-adjustment angle in a moving direction; and when the distance reaches a second trigger threshold, send a turning signal, where the turning signal is used for controlling the self-moving device to turn, where the second trigger threshold is less than the first trigger threshold.

According to another aspect of the embodiments of the present disclosure, in the self-moving device, after the self-moving device deflects by the pre-adjustment angle, the controller is further configured to control the self-moving device to reduce a speed and continue to move in a direction after deflecting by the pre-adjustment angle, and send the turning signal when the distance reaches the second trigger threshold.

According to another aspect of the embodiments of the present disclosure, in the self-moving device, an obstacle detector is further included, where the obstacle detector is connected to the controller of the main body, and the obstacle detector is configured to obtain detection data of the obstacle, obtain the distance between the self-moving device and the obstacle according to the detection data, and send the distance to the controller, or send obtained detection data of the obstacle to the controller, to cause the controller to determine the distance between the self-moving device and the obstacle according to the detection data.

According to another aspect of the embodiments of the present disclosure, in the self-moving device, determining the distance between the self-moving device and the obstacle includes:
determining the distance between the self-moving device and the obstacle according to received distance information sent by a server.

According to another aspect of the embodiments of the present disclosure, in the self-moving device, the obstacle detector includes at least one of the following:
an energy wave sensor, configured to emit an energy wave and receive a reflected signal of the energy wave, where the detection data includes measurement data of the energy wave;
an image capture apparatus, configured to obtain image data of the obstacle, where the detection data includes the image data.

According to another aspect of the embodiments of the present disclosure, the controller is further configured to:
determine whether the obstacle needs to be avoided according to the detection data; and
if avoidance is required, determine whether the distance between the self-moving device and the obstacle reaches the first trigger threshold.

According to another aspect of the embodiments of the present disclosure, in the self-moving device, the controller is further configured to determine parameter information of the self-moving robot, and determine the pre-adjustment angle according to the parameter information, where the parameter information includes at least a machine model and speed information, or the parameter information includes at least machine size information and speed information.

According to another aspect of the embodiments of the present disclosure, in the self-moving device, at least one of the following parameter settings is adopted:
a value range of the pre-adjustment angle is from 2 degrees to 8 degrees;
a value range of the first trigger threshold is from 25 cm to 40 cm.

According to another aspect of the embodiments of the present disclosure, in the self-moving device, the controller is further configured to:
adjust a value of the first trigger threshold; and
adjust a corresponding pre-adjustment angle according to a first trigger threshold obtained after adjustment and an adjustment relationship between the pre-adjustment angle and the first trigger threshold.

According to another aspect of the embodiments of the present disclosure, in the self-moving device, the controller is further configured to:
when it is detected that the distance to the obstacle is between the first trigger threshold and the second trigger threshold, increase a data processing speed, or send an alert processing signal to the obstacle detector obstacle detector, where the alert processing signal is used for controlling the obstacle detector to increase a detection frequency on the obstacle.

According to another aspect of the embodiments of the present disclosure, a control method for a self-moving device for avoiding obstacles is further provided, including:
determining a distance between a self-moving device and an obstacle;
when the distance reaches a first trigger threshold, sending a pre-adjustment signal, where the pre-adjustment signal is used for controlling the mobile device to deflect by a pre-adjustment angle in a moving direction; and
when the distance reaches a second trigger threshold, sending a turning signal, where the turning signal is used for controlling the self-moving device to turn according to a preset turning angle, where the second trigger threshold is less than the first trigger threshold.

According to another aspect of the embodiments of the present disclosure, in the method, at least a step of determining obstacle feedback data such as the distance between the self-moving device and the obstacle includes at least one of the following:
determining the distance to the obstacle based on obstacle feedback detection data obtained by an energy wave sensor;
determining the distance between the obstacle feedback data and the obstacle based on image data obtained by an image capture apparatus.

According to another aspect of the embodiments of the present disclosure, in the method, the determining a distance between the self-moving device and an obstacle includes at least one of the following:
determining the distance between the self-moving device and the obstacle according to obtained detection data of the obstacle;
determining the distance between the self-moving device and the obstacle according to received distance information sent by a server;
determining the distance between the self-moving device and the obstacle according to received distance information sent by an obstacle detector.

According to another aspect of the embodiments of the present disclosure, the method further includes: when it is detected that the distance to the obstacle is between the first trigger threshold and the second trigger threshold, increasing a data processing speed, or controlling an obstacle detector to increase a detection frequency on the obstacle.

According to another aspect of the embodiments of the present disclosure, a control method for a self-moving device for avoiding obstacles is further provided, including:
receiving a first control instruction of a server, where the first control instruction is used for instructing to control a self-moving device to deflect by a pre-adjustment angle in a moving direction; and the first control instruction is sent to the self-moving device when a distance between the self-moving device and an obstacle reaches a first trigger threshold; and
receiving a second control instruction of the server, where the second control instruction is used for instructing to control the self-moving device to turn according to a preset turning angle; and the second control instruction is sent to the self-moving device when the distance between the self-moving device and the obstacle reaches a second trigger threshold, where the second trigger threshold is less than the first trigger threshold.

According to another aspect of the embodiments of the present disclosure, a computer-readable storage medium is further provided. When instructions in the storage medium are executed by a processor of an electronic device, the electronic device is caused to perform the method according to any embodiment of the present disclosure.

In the technical solutions provided in the embodiments of the present disclosure, the distance to the obstacle can be determined through the self-moving device. The controller can pre-adjust the self-moving device to deflect by a certain angle to move before the distance between the self-moving device and the obstacle reaches a normal turning distance. When the normal turning distance is reached, the self-moving device is then controlled to turn according to a preset turning angle. In this way, in this solution, since the self-moving device pre-deflects by a certain angle and moves before normal turning, so that a turning angle becomes smaller and a turning radius becomes larger when the normal turning distance is reached. Therefore, the obstacle can be avoided in time, effectively ensuring the safety of the obstacle and the self-moving device.

It should be understood that the above general description and the following detailed description are merely for exemplary and explanatory purposes, and cannot limit the present disclosure.

### BRIEF DESCRIPTION OF THE DRAWINGS

The accompanying drawings herein, which are incorporated into this specification and constitute a part of this specification, show embodiments that conform to the present disclosure, are used for describing a principle of the present disclosure together with this specification, and do not constitute an improper limitation on the present disclosure.
FIG. 1 is a schematic structural diagram of an embodiment of a self-moving device according to an exemplary embodiment.
FIG. 2 is a schematic diagram of moving routes of a self-moving device avoiding an obstacle before and after deflecting by a pre-adjustment angle according to this specification.
FIG. 3 is a schematic structural diagram of an embodiment of a self-moving device according to an exemplary embodiment.
FIG. 4 is a schematic structural diagram of an obstacle detector according to an exemplary embodiment.
FIG. 5 is a schematic flowchart of a control method for a self-moving device for avoiding obstacles according to an exemplary embodiment.
FIG. 6 is a schematic flowchart of another method according to an exemplary embodiment.
FIG. 7 is a schematic flowchart of another method according to an exemplary embodiment.
FIG. 8 is a schematic structural diagram of a controller 14 according to this specification.

Attached drawing markings:
12- Obstacle detection device; 14- Controller; 120- Energy wave sensor; 122- Image capture apparatus; 10- processor; 20- Memory; 30- Transmission module.

### DETAILED DESCRIPTION

To make an ordinary person in the art understand the technical solutions in this application better, the following clearly and completely describes the technical solutions in embodiments of the present disclosure with reference to the accompanying drawings.

It should be noted that, in the specification, claims, and accompanying drawings of the present disclosure, the terms "first", "second", and so on are intended to distinguish between similar objects but do not necessarily indicate a specific order or sequence. It should be understood that the data termed in such a way is interchangeable in proper circumstances, so that the embodiments of the present disclosure described herein may be implemented in orders except the order illustrated or described herein. The implementations described in the following exemplary embodiments do not represent all implementations that are consistent with the present disclosure. Instead, the implementations are merely examples of apparatuses and methods that are consistent with some aspects of the present disclosure as recited in the appended claims. The term "include," "comprise," or any other variant thereof is intended to cover a non-exclusive inclusion, so that a process, a method, a product, or a device that includes a series of elements not only includes such elements, but also includes other elements not expressly listed, or further includes elements inherent to the process, the method, the product, or the device. Without more limitations, other same or equivalent elements are not excluded from existing in the process, the method, the product, or the device that includes the elements. For example, the words such as "first" and "second" are used to denote names, and do not denote any particular order.

In this application, when a component is referred to as "being fixed to" another component, the component may be directly on the other component, or an intervening component may exist. When a component is considered to be "connected to" another component, or one component is in "connection" to another component, the component may be directly connected to the another component or there may be an intervening component. In addition, the connection should be understood in a broad sense. For example, the connection may be a fixed connection, a detachable connection, or an integral connection; a mechanical connection or an electrical connection. A person of ordinary skill in the art may understand the specific meanings of the foregoing terms in the present embodiments according to specific situations.

In this specification, the terms such as "vertical", "horizontal", "left", "right", "up", "down", "front", "back", "circumferential", "moving direction" and similar expressions are based on orientation or position relationships shown in the accompanying drawings, and are used only for ease and brevity of illustration and description of the present embodiments, rather than indicating or implying that the mentioned apparatus or element needs to have a particular orientation or needs to be constructed and operated in a particular orientation. Therefore, such terms should not be construed as a limitation on the present embodiments.

Unless otherwise defined, meanings of technical and scientific terms used in this specification can be the same as those usually understood by a person skilled in the art to which the present embodiments belongs. In this specification, terms used in the specification of the present embodiments are merely intended to describe objectives of the specific embodiments, but are not intended to limit the present embodiments. The term "and/or" or "at least one" used in this specification includes any and all combinations of one or more related listed items. It should be noted that turning, deflection, and the like described in this application can include a manner in which a self-moving device stops moving and continues to move after a turning or deflection action is completed, or can include a manner in which the self-moving device turns or deflects while moving.

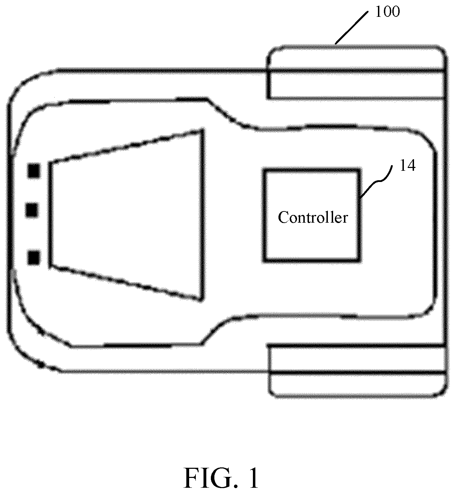

As shown in FIG. 1, an embodiment of a self-moving device provided in this specification can include:
a main body 100; and
a controller 14, the controller being disposed in the main body 10, and the controller 14 being configured to: determine a distance between the self-moving device and an obstacle; when the distance reaches a first trigger threshold, send a pre-adjustment signal, where the pre-adjustment signal is used for controlling the self-moving device to deflect by a pre-adjustment angle in a moving direction; and when the distance reaches a second trigger threshold, send a turning signal, where the turning signal is used for controlling the self-moving device to turn, where the second trigger threshold is less than the first trigger threshold.

For example, in some implementations, when the distance reaches the second trigger threshold, the turning signal is sent, and the turning signal is used for controlling the self-moving device to turn according to a preset turning angle.

It should be pointed out that in other implementations, when the distance reaches the second trigger threshold, the turning signal is sent, and the turning signal is used for controlling the self-moving device to turn according to a preset turning strategy. The turning strategy may be, for example, decelerating while turning, or decelerating while turning, and then accelerating when a speed is decelerated to a predetermined threshold, so that the speed may be quickly restored to a working state when the obstacle is avoided. Certainly, the turning strategy may alternatively be to control the device to turn at a certain turning rate.

Specifically, when the controller determines that the distance reaches the first trigger threshold, for example, the self-moving device may turn by a pre-deflection angle at an original speed or at a speed greater than the original speed. After turning by the pre-deflection angle is completed, the self-moving device decelerates and moves in a direction after turning by the pre-deflection angle, where the deceleration may be performed in, for example, variable speed deceleration, constant speed deceleration, and other manners.

In an optional implementation, the deceleration is performed according to a set rate, where the set rate may be determined according to the following principle: The self-moving device is caused to decelerate to a target turning speed for turning before the second trigger threshold is reached or when the second trigger threshold is reached.

In some implementations, the foregoing first trigger threshold may be, for example, 40 cm, the foregoing second trigger threshold may be, for example, 20 cm, and the foregoing pre-deflection angle may be, for example, 5 degrees.

The controller 14 determines the distance to the obstacle, and the distance may be calculated based on data information collected or received by the controller 14, or may be a received distance sent by another device. For example, the distance may be obtained directly from an obstacle detector (distance data directly measured by an ultrasonic sensor, a laser rangefinder, or the like); or detection data of an obstacle detector (such as image data, measurement data of an energy wave that needs to be processed, or the like) may be received, and then the detection data is processed to obtain the distance; or the distance may be indirectly obtained through an infrared sensing temperature (a correspondence between the obstacle, a temperature, and the distance is obtained through experiments).

Certainly, the distance between the self-moving device and the obstacle may alternatively be monitored through a cloud (a remote server), then the cloud sends the distance to the controller 14, and the controller 14 executes a control strategy according to received distance information sent by the cloud.

The first trigger threshold is a set distance at which the self-moving device needs to pre-deflect to adjust an angle, which may be set according to an operating scenario, a requirement for avoiding obstacles, a specification or size of the self-moving device, and the like; or may be set and adjusted with reference to collected surrounding environment data, map data, and the like. The second trigger threshold is usually set to a distance for normal turning of the self-moving device. In the solution of this embodiment, when the self-moving devices normally reaches the distance of the second trigger threshold and turns, because the self-moving device pre-deflects by the pre-adjustment angle at the distance of the first trigger threshold, when the self-moving device reaches a normal turning distance, a turning angle becomes smaller and a turning radius becomes larger, so that the obstacle can be avoided in time and the safety of the obstacle and the self-moving device can be effectively ensured.

In some other embodiments of the present disclosure, the self-moving device may further include an obstacle detector 12. The obstacle detector 12 may be connected to the controller of the main body, and the obstacle detector 12 may be configured to: obtain detection data of the obstacle, determine the distance between the self-moving device and the obstacle according to the detection data, and send the distance to the controller 14; or send obtained detection data of the obstacle to the controller 14, to cause the controller 14 to determine the distance between the self-moving device and the obstacle according to the detection data.

The self-moving device may be provided with an obstacle detector 12 to obtain detection data of the obstacle. In some embodiments, the obstacle detector 12 may directly calculate the distance between the self-moving device and the obstacle according to the detection data, and then send the distance to the controller 14. In some other embodiments, the obstacle detector 12 may alternatively send the obtained detection data to the controller 14, and the controller 14 calculates the distance between the self-moving device and the obstacle according to the detection data.

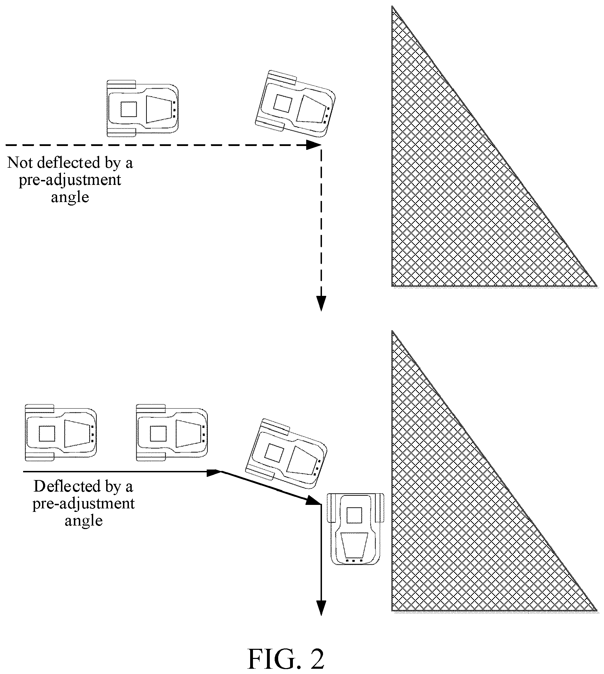

FIG. 2 is a schematic diagram of moving routes of a self-moving device avoiding an obstacle before and after deflecting by a pre-adjustment angle according to this specification. A dotted line part is a schematic diagram of a moving route without pre-deflecting by an adjustment angle, and a solid line part is a schematic diagram of a moving route with an angle pre-deflected. It may also be known from FIG. 2 that the self-moving device provided in this specification may detect information about an obstacle in a moving direction in real time through the obstacle detector. The controller of the self-moving device may calculate a distance to the obstacle according to the information about the obstacle. The controller may pre-adjust the self-moving device to deflect by a certain angle to move before the distance between the self-moving device and the obstacle reaches a normal turning distance. When the normal turning distance is reached, the self-moving device is then controlled to turn according to a preset turning angle. In this way, in this solution, since the self-moving device pre-deflects by a certain angle and moves before normal turning, so that a turning angle becomes smaller and a turning radius becomes larger when the normal turning distance is reached. Therefore, the obstacle can be avoided in time, effectively ensuring the safety of the obstacle and the self-moving device.

In some other embodiments, another device may obtain the detection data, calculate the distance between the self-moving device and the obstacle according to the detection data, and then send the distance to the controller 14, for example, a base station, a remote server, or another device that guides the self-moving device to move. For ease of description, in this embodiment, a device that sends the distance information (including the distance between the self-moving device and the obstacle) to the controller 12 and is indirectly mechanically connected to the self-moving device may be collectively referred to as a server, such as the base station, the remote server, and the like described above. Therefore, in another embodiment of the self-moving device provided in the present disclosure, the determining a distance between the self-moving device and an obstacle includes:
determining the distance between the self-moving device and the obstacle according to the received distance information sent by the service.

In this way, the self-moving device may determine the distance without the obstacle detector mounted on the self-moving device, so that a weight and a data processing requirement of the self-moving device can be reduced, and the movement convenience, operational flexibility, and data processing reliability (less data needs to be processed) of the self-moving device can be improved.

In this embodiment, the self-moving device may generally include a device that may move according to a predetermined moving route and a control strategy, and may include an intelligent lawn mower, a sweeping robot, an automatic delivery machine, and the like. The self-moving device generally may operate without human intervention. The self-moving device in the embodiments of this specification may be a device in contact with people or an external device. For example, the self-moving device may be provided with a handrail, and an operator may follow the self-moving device and hold the handrail of the self-moving device. However, in this case, the moving route and the control strategy of the self-moving device still come from control logic of the self-moving device. Even if the operator holds the handrail or may actively change the moving direction or a speed of the self-moving device through the handrail, this kind of device still belongs to the self-moving device described in the embodiments of this specification. Typological, a manned self-moving device may also be included.

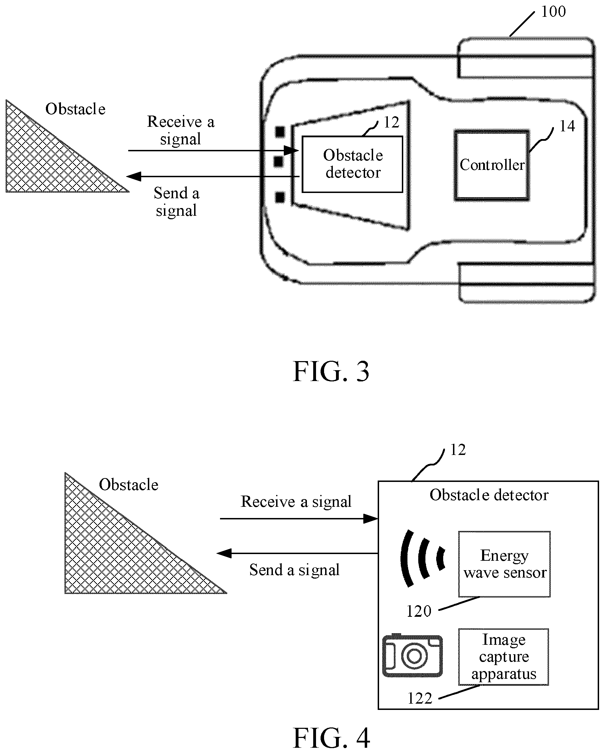

In the self-moving device, the main body generally may include a driving device (such as a power supply), a moving apparatus (such as a moving wheel or a track), a turning device (a rack and pinion turning gear or a worm and crankpin turning gear), and a corresponding operating tool (such as a lawn mowing apparatus or a cleaning apparatus). FIG. 3 is a schematic structural diagram of an embodiment of a self-moving device according to an exemplary embodiment. As shown in FIG. 3, in the self-moving device according to this embodiment of this specification, the obstacle detector 12 may obtain at least the detection data of the obstacle. A method for obtaining the detection data of the obstacle may include a self-transmitting and self-receiving manner, that is, the obstacle detector 12 may emit an energy wave such as an ultrasonic wave, a laser, and the like by itself, and receive a reflected signal to obtain data information; and may also include a manner of obtaining obstacle feedback data transmitted by a third party, such as the detection data of the obstacle sent by an external device or a remote server by using a wireless network. It should be understood that in some embodiments of this specification, the detection data may include received original data information, such as an analog signal received by the obstacle detector 12, which may include an amplitude, a frequency, a phase, and the like of the signal. In some other embodiments, the detection data may also include data information obtained by performing processing such as conversion, filtering, and the like on the original data information. For example, the obstacle detector 12 may perform analog-to-digital conversion on the received original data information. Certainly, the step of performing processing on the original data information may also be performed by the controller 14.

The controller 14 may have a data processing capability, and may also have a wired or wireless communication capability. For example, the controller may be or include a microcontroller unit (microcontroller unit, MCU). The controller 14 may calculate the distance to the obstacle according to the obstacle feedback data, and may also send a control signal, such as a pre-adjustment signal or a turning signal, or a moving or retreating signal, and the like, to control a moving direction, a moving mode, a moving parameter, and the like of the self-moving device.

In another embodiment of the self-moving device 10, the obstacle detector 12 may be a sensor based on an energy wave (which may be briefly referred to as an capability wave sensor). The energy wave may include propagating energy in the form of waves, and the waves may include a mechanical wave, an electromagnetic wave, and a material wave. Specifically, the sensor based on an energy wave may include an ultrasonic sensor, an infrared sensor, a ray sensor (such as a γ ray), and the like. The energy wave sensor may emit a corresponding energy wave and receive a reflected signal of the energy wave. For example, the ultrasonic sensor may emit an ultrasonic signal and receive an ultrasonic reflected signal reflected back by a target. In this way, the controller may calculate the distance to the obstacle according to the emitted energy wave and the reflected signal.

In another embodiment of the self-moving device 10, the obstacle detector 12 may be an image capture apparatus, such as a picture taking or video recording apparatus. The image capture apparatus may obtain image data of the self-moving device 10 in at least the moving direction, and may perform identification processing according to the image data to determine the distance to the target (obstacle). Specifically, some image algorithms or machine learning models/networks may be used to identify the distance to the target according to the image data. For example, a harris corner (harris corner) point method may be used to detect a corner point, and an initial matching point pair may be obtained based on an open source computer vision library (open source computer vision library, OPENCV) method. Then a matching feature point pair may be guided based on a random sample consensus (random sample consensus, RANSAC) algorithm, and the distance to the obstacle may be predicted by using a parallax principle.

FIG. 4 is a schematic structural diagram of an obstacle detector according to an exemplary embodiment. As shown in FIG. 4, the obstacle detector in the self-moving device may include the foregoing capability wave sensor, and may also include the image capture apparatus. Certainly, the obstacle detector may alternatively include both the energy wave sensor and the image capture apparatus. Specifically, the obstacle detector 12 may include at least one of the following:
an energy wave sensor 120, configured to emit an energy wave and receive a reflected signal of the energy wave, where the detection data includes measurement data of the energy wave; and
an image capture apparatus 122, configured to obtain image data of the obstacle, where the detection data includes the measurement data of the energy wave. The controller may determine the distance to the obstacle according to an identification processing result of the image data.

In another embodiment of the self-moving device provided in this specification, the controller 14 may further be configured to:
determine whether the obstacle needs to be avoided according to the obstacle feedback data; and
if avoidance is required, detect whether the distance to the obstacle reaches the first trigger threshold.

In the operating process, the self-moving device may detect and obtain obstacle information in the moving direction in real time. The controller 14 may determine whether avoidance is required according to the obstacle feedback data. For example, for some large obstacles or obstacles that may cause damage if not avoided, such as a wall, a stone, and the like, it may be set that the obstacles need to be avoided. If it is determined that avoidance is required, whether the distance to the obstacle reaches the first trigger threshold may be detected in real time. For some obstacles such as a paper scrap and a leaf that do not need to be avoided, the self-moving device may continue to move without pre-adjustment.

In another embodiment of the self-moving device provided in this specification, at least one of the following parameter settings may be adopted:
a value range of the pre-adjustment angle is from 2 degrees to 8 degrees; and
a value range of the first trigger threshold is from 25 cm to 40 cm.

The pre-adjustment angle may be a preset slight adjustment angle. For example, when the second trigger threshold is 20 cm and the first trigger threshold is 30 cm, the pre-adjustment angle may be set to 5 degrees. In this embodiment of this specification, a value of the pre-adjustment angle may be set within a range from 2 degrees to 8 degrees. The value range of the pre-adjustment angle provided in this specification may effectively improve the safety and reliability of the self-moving device in avoiding the obstacle while ensuring an originally planned operating route or operating region. Similarly, the value range of the first trigger threshold may be from 25 cm to 40 cm, which effectively improves the safety and reliability of the self-moving device in avoiding the obstacle.

Certainly, the values of the foregoing parameters may be within value ranges that are considered while ignoring a volume of the self-moving device, or taking a boundary point of the self-moving device closest to the obstacle or a center point of the self-moving device. In an actual application, the parameter values may be further adjusted accordingly with reference to an actual model or size of the self-moving device. Therefore, in another embodiment of the self-moving device provided in this specification, the controller may further be configured to determine model/size information of the self-moving robot, and determine the pre-adjustment angle according to the model/size information.

For example, in a case that the self-moving device has a standard volume (the logo volume may be customized), when the second trigger threshold is 20 cm and the first trigger threshold is 30 cm, the set pre-adjustment angle is 3 degrees, and the pre-adjustment angle is further adjusted to 5 degrees with reference to the model or size of the self-moving device.

The first trigger threshold and the second trigger threshold in this embodiment may be set and adjusted according to operating requirements or different model sizes of the self-moving device, a size of a moving wheel, and the like. Certainly, the moving wheel not only includes a conventional circular wheel, but may also include a track, a polygonal wheel, and the like. For ease of description, all these wheels may be collectively referred to as a moving wheel in some embodiments of this specification.

In another exemplary embodiment of this application, the controller 14 may be further configured to:
adjust a value of the first trigger threshold; and
adjust a corresponding pre-adjustment angle according to a first trigger threshold obtained after adjustment and an adjustment relationship between the preset adjustment angle and the first trigger threshold.

The parameter of the self-moving device in some embodiments of this specification may further be adjusted, which may be pre-adjusted before operation, optimized and adjusted after operation, or adjusted in real time in an operating process. An adjustment relationship between the preset adjustment angle and the first trigger threshold may be preset, so that when the first trigger threshold is adjusted, the pre-adjustment angle is adjusted simultaneously, thereby effectively ensuring the safety of the self-moving device in avoiding the obstacle and the reliability of an avoidance strategy. For example, when the first trigger threshold is set to 40 cm, the pre-adjustment angle is set to 5 degrees. In some embodiments, the self-moving device may detect the distance to the obstacle in real time, when it is determined that avoidance is required, if it is detected that the distance to the obstacle is 40 cm, the self-moving device may be controlled to deflect by 5 degrees in a forward direction. Certainly, other processing or control of the processing unit may also be included. For example, whether the obstacle is located on a left side or a right side of the self-moving device may be determined according to the obstacle feedback data. In this way, when deflecting or turning is performed according to the pre-adjustment angle, a deflection or turning direction may be clearly determined. If the first trigger threshold is adjusted to 35 cm, since the pre-adjustment distance becomes shorter, the pre-adjustment angle may be increased accordingly, which can effectively ensure the safety of the self-moving device in avoiding the obstacle and the reliability of the avoidance strategy.

In another exemplary embodiment of this application, the controller 14 is further configured to:
when it is detected that the distance to the obstacle is between the first trigger threshold and the second trigger threshold, increase a data processing speed, or send an alert processing signal to the obstacle detector 12, where the alert processing signal is used for controlling the obstacle detector 12 to increase a detection frequency on the obstacle.

The detection frequency may include a frequency at which the obstacle detector emits a signal. Increasing data processing may include allocating more hardware resources, software resources, and the like (such as a thread, increasing a processor frequency, and the like). When the distance between the self-moving device and the obstacle is between the first trigger threshold and the second trigger threshold, more timely and accurate detection is required. Therefore, in this embodiment, the data processing speed of the controller 14 may be provided. For example, a processor is enabled to perform mechanical energy data processing in an overclocked state, or a frequency of an ultrasonic emission signal is increased, and a processing speed of the controller 14 for a reflected signal is provided simultaneously. In this way, in this embodiment, when it is detected that the distance to the obstacle is between the first trigger threshold and the second trigger threshold, the data processing speed or the detection frequency on the obstacle is increased, so that the obstacle can be avoided in time and the safety of the obstacle and the self-moving device can be effectively ensured.

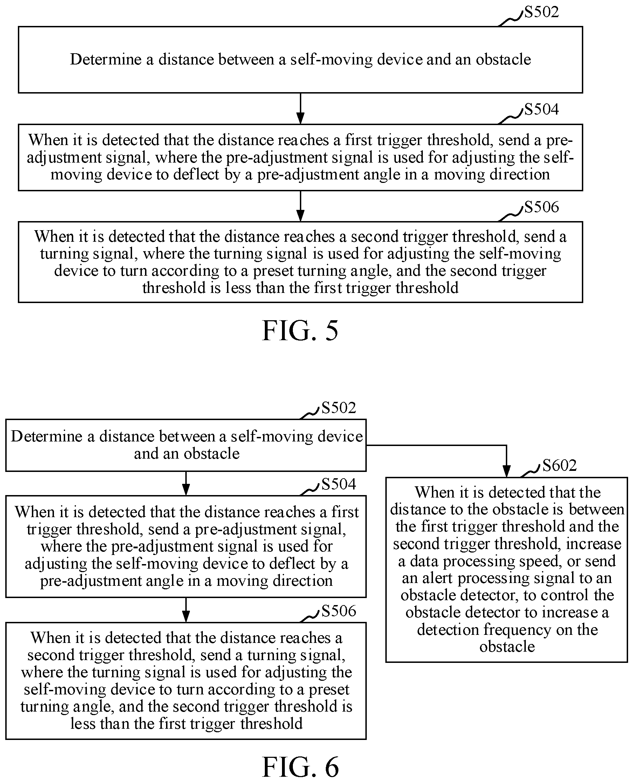

FIG. 5 is a schematic flowchart of a control method for a self-moving device for avoiding obstacles according to an exemplary embodiment. As shown in FIG. 5, the method may include the following steps.

S502: Determine a distance between a self-moving device and an obstacle.

S504: When it is detected that the distance reaches a first trigger threshold, send a pre-adjustment signal, where the pre-adjustment signal is used for adjusting the self-moving device to deflect by a pre-adjustment angle in a moving direction.

S506: When it is detected that the distance reaches a second trigger threshold, send a turning signal, where the turning signal is used for adjusting the self-moving device to turn according to a preset turning angle, and the second trigger threshold is less than the first trigger threshold.

As the embodiment of the self-moving device described above, in another embodiment of the method disclosed in this specification, at least a step of determining obstacle feedback data such as the distance between the self-moving device and the obstacle includes at least one of the following:
determining the distance to the obstacle based on obstacle feedback detection data obtained by an energy wave sensor; and
determining the distance between the obstacle feedback data and the obstacle based on image data obtained by an image capture apparatus.

In another embodiment of the control method for a self-moving device for avoiding obstacles in the present disclosure, the determining a distance between a self-moving device and an obstacle includes at least one of the following:
determining the distance between the self-moving device and the obstacle according to obtained detection data of the obstacle;
determining the distance between the self-moving device and the obstacle according to received distance information sent by a server; and
determining the distance between the self-moving device and the obstacle according to received distance information sent by an obstacle detector.

As the embodiment of the self-moving device described above, in another embodiment of the method disclosed in this specification, the method may further include:
adjusting a value of the first trigger threshold; and
accordingly modifying and adjusting, according to an adjustment relationship between the preset adjustment angle and the first trigger threshold, a preset adjustment angle corresponding to an adjusted first trigger threshold.

FIG. 6 is a schematic flowchart of another method according to an exemplary embodiment. As the embodiment of the self-moving device described above, in another embodiment of the method disclosed in this specification, the method further includes the following step.

S602: When it is detected that the distance to the obstacle is between the first trigger threshold and the second trigger threshold, increase a data processing speed, or send an alert processing signal to the obstacle detector, where the alert processing signal is used for controlling the obstacle detector to increase a detection frequency on the obstacle.

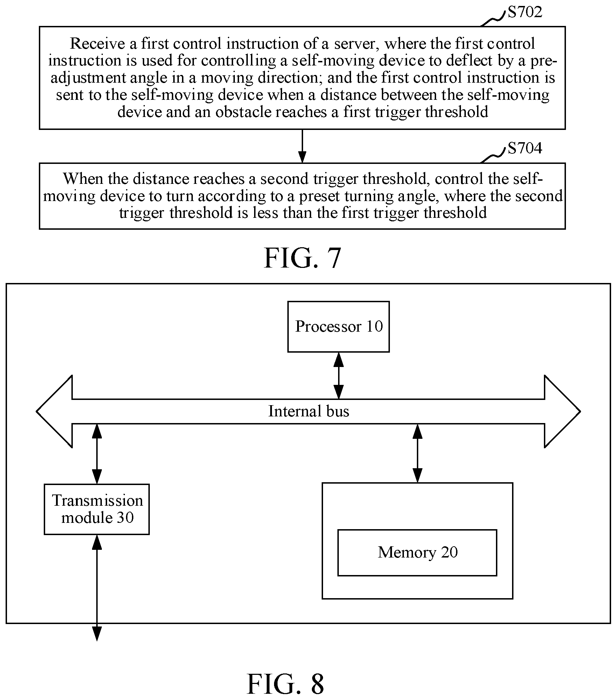

FIG. 7 is a schematic flowchart of a control method for a self-moving device for avoiding obstacles according to an exemplary embodiment. As shown in FIG. 7, the method may include the following steps.

S702: Receive a first control instruction of a server, where the first control instruction is used for instructing to control a self-moving device to deflect by a pre-adjustment angle in a moving direction; and the first control instruction is sent to the self-moving device when a distance between the self-moving device and an obstacle reaches a first trigger threshold.

S704: Receive a second control instruction of the server, where the second control instruction is used for instructing to control the self-moving device to turn according to a preset turning angle; and the second control instruction is sent to the self-moving device when the distance between the self-moving device and the obstacle reaches a second trigger threshold, where the second trigger threshold is less than the first trigger threshold.

It can be understood that the embodiments of the self-moving device and the method of this specification are all described in a progressive manner, for same or/similar parts in the embodiments, reference can be made to the embodiments, and description of each embodiment focuses on differences from other embodiments. For related parts, reference can be made to description and explanation in other method embodiments. According to the foregoing description of the embodiments of the self-moving device, the method provided in the present disclosure may also include other implementations. Methods implemented on the self-moving device in this specification for avoiding obstacles are all included in the scope of the method described in this application.

It should be understood that although the steps of the flowcharts in FIG. 5 to FIG. 7 are shown sequentially according to arrows, the steps are not necessarily performed according to an order indicated by the arrows. Unless otherwise clearly specified in this specification, the steps are performed without any strict order limit, and may be performed in other orders. In addition, at least some steps in FIG. 5 to FIG. 7 may include a plurality of steps or a plurality of stages. The steps or the stages are not necessarily performed at a same moment, but may be performed at different moments. The steps or the stages are not necessarily performed in sequence, but may be performed in turn or alternately with another step or at least some of steps or stages of the another step.

FIG. 8 is a schematic structural diagram of a controller 14 according to this specification. One or more (only one is shown in the figure) processors 10 (the processors 10 may include but are not limited to processing apparatuses such as a microprocessor MCU or a programmable logical device FPGA), a memory 20 configured to store data, and a transmission module 30 configured to perform a communication function may be included. A person of ordinary skill in the art may understand that a structure shown in FIG. 8 is only an example, and does not constitute a limitation on a structure of the self-moving device or the controller. For example, the controller 14 may alternatively include more or fewer devices than those shown in FIG. 8, for example, may alternatively include an internal memory, a database or a multi-level cache, and an image processor, or have other configurations different from those shown in FIG. 8.

In an exemplary embodiment, a storage medium including computer-readable instructions is further provided, for example, a memory including instructions. The instructions may be executed by a processor of a device to perform the foregoing method. The storage medium is a non-transitory computer-readable storage medium. For example, the non-volatile computer-readable storage medium may be a ROM, a random access memory (RAM), a CD-ROM, a magnetic tape, a floppy disk, an optical data storage device, or the like; or a readable storage medium in another form, for example, a quantum memory, a graphene memory, and the like.

The embodiments in this specification are described in a progressive manner, and the same or similar parts between the various embodiments can be referred to each other. Each embodiment focuses on differences from other embodiments.

It should be noted that the method, the self-moving device, and the storage medium may further include other implementations according to the description of the method or device embodiments. For specific implementations, reference may be made to the description of relevant method or device embodiments. In addition, new embodiments formed by combining features of various method, device, and storage medium embodiments still fall within the implementation scope covered by the present disclosure, and details are not described herein again.

For ease of description, when the foregoing self-moving device is described, the self-moving device is divided into modules according to functions, which are separately described. Certainly, during implementation of one or more embodiments of this specification, the functions of the modules may be implemented in a same piece of or a plurality of pieces of software and/or hardware, or modules implementing a same function may be implemented by using a combination of a plurality of submodules or subunits. The described device embodiments are merely exemplary. For example, division of the energy wave sensor and the image capture apparatus is merely logical function division and there may be other division manners during actual implementation. For example, a plurality of units or components may be combined or integrated into another system, or some features may be ignored or not performed. In addition, the coupling, communication connection, and the like between apparatuses or units displayed or described in the self-moving device may be realized by direct and/or indirect coupling/connection, or implemented through some standard or customized interfaces, protocols, and the like, or implemented in an electrical, mechanical, or another form.

A person skilled in the art can easily figure out other implementation solutions of the present disclosure after considering the specification and practicing the present embodiments disclosed herein. The present disclosure is intended to cover any variation, use, or adaptive change of the present disclosure. The variations, uses, or adaptive changes follow the general principles of the present disclosure and include common general knowledge or common technical means in the art that are not disclosed in the present disclosure. The specification and the embodiments are considered as merely exemplary, and the scope and spirit of the present disclosure are pointed out in the following claims.

It should be understood that the present disclosure is not limited to the precise structures described above and shown in the accompanying drawings, and various modifications and changes can be made without departing from the scope of the present disclosure.

## Claims

1. A self-moving device, comprising:
a main body; and
a controller, the controller being disposed in the main body, and the controller being configured to: determine a distance between the self-moving device and an obstacle; when the distance reaches a first trigger threshold, send a pre-adjustment signal, wherein the pre-adjustment signal is used for controlling the self-moving device to deflect by a pre-adjustment angle in a moving direction; and when the distance reaches a second trigger threshold, send a turning signal, wherein the turning signal is used for controlling the self-moving device to turn, wherein the second trigger threshold is less than the first trigger threshold.

2. The self-moving device according to claim 1, wherein after the self-moving device deflects by the pre-adjustment angle, the controller is further configured to control the self-moving device to reduce a speed and continue to move in a direction after deflecting by the pre-adjustment angle, and send the turning signal when the distance reaches the second trigger threshold.

3. The self-moving device according to claim 1, further comprising an obstacle detector, wherein the obstacle detector is connected to the controller, and the obstacle detector is configured to: obtain detection data of the obstacle, obtain the distance between the self-moving device and the obstacle according to the detection data, and send the distance to the controller, or send obtained detection data of the obstacle to the controller, to cause the controller to determine the distance between the self-moving device and the obstacle according to the detection data.

4. The self-moving device according to claim 3, wherein the obstacle detector comprises at least one of the following:
an energy wave sensor, configured to emit an energy wave and receive a reflected signal of the energy wave, wherein the detection data comprises measurement data of the energy wave;
an image capture apparatus, configured to obtain image data of the obstacle, wherein the detection data comprises the image data.

5. The self-moving device according to claim 3, wherein the controller is further configured to:
determine whether the obstacle needs to be avoided according to the detection data; and
if avoidance is required, determine whether the distance between the self-moving device and the obstacle reaches the first trigger threshold.

6. The self-moving device according to claim 1, wherein the controller is further configured to determine parameter information of the self-moving robot, and determine the pre-adjustment angle according to the parameter information, wherein the parameter information comprises at least a machine model and speed information, or the parameter information comprises at least machine size information and speed information.

7. The self-moving device according to claim 1, wherein at least one of the following parameter settings is adopted:
a value range of the pre-adjustment angle is from 2 degrees to 8 degrees;
a value range of the first trigger threshold is from 25 cm to 40 cm.

8. The self-moving device according to claim 1, wherein the controller is further configured to:
adjust a value of the first trigger threshold; and
adjust a corresponding pre-adjustment angle according to a first trigger threshold obtained after adjustment and an adjustment relationship between the pre-adjustment angle and the first trigger threshold.

9. The self-moving device according to claim 3, wherein the controller is further configured to:
when it is detected that the distance to the obstacle is between the first trigger threshold and the second trigger threshold, increase a data processing speed, or send an alert processing signal to the obstacle detector, wherein the alert processing signal is used for controlling the obstacle detector to increase a detection frequency on the obstacle.

10. A control method for a self-moving device for avoiding obstacles, comprising:
determining a distance between the self-moving device and an obstacle;
when the distance reaches a first trigger threshold, sending a pre-adjustment signal, wherein the pre-adjustment signal is used for controlling the mobile device to deflect by a pre-adjustment angle in a moving direction; and
when the distance reaches a second trigger threshold, sending a turning signal, wherein the turning signal is used for controlling the self-moving device to turn according to a preset turning angle, wherein the second trigger threshold is less than the first trigger threshold.

11. The method according to claim 10, wherein the step of determining a distance between the self-moving device and an obstacle comprises at least one of the following:
determining the distance to the obstacle based on detection data obtained by an energy wave sensor;
determining the distance to the obstacle based on image data obtained by an image capture apparatus.

12. The method according to claim 10, wherein the determining a distance between the self-moving device and an obstacle comprises at least one of the following:
determining the distance between the self-moving device and the obstacle according to obtained detection data of the obstacle;
determining the distance between the self-moving device and the obstacle according to received distance information sent by a server;
determining the distance between the self-moving device and the obstacle according to received distance information sent by an obstacle detector.

13. The method according to claim 10, wherein the method further comprises:
when it is detected that the distance to the obstacle is between the first trigger threshold and the second trigger threshold, increasing a data processing speed, or controlling an obstacle detector to increase a detection frequency on the obstacle.

14. A control method for a self-moving device for avoiding obstacles, comprising:
receiving a first control instruction of a server, wherein the first control instruction is used for instructing to control the self-moving device to deflect by a pre-adjustment angle in a moving direction; and the first control instruction is sent to the self-moving device when a distance between the self-moving device and an obstacle reaches a first trigger threshold; and
receiving a second control instruction of the server, wherein the second control instruction is used for instructing to control the self-moving device to turn according to a preset turning angle; and the second control instruction is sent to the self-moving device when the distance between the self-moving device and the obstacle reaches a second trigger threshold, wherein the second trigger threshold is less than the first trigger threshold.

15. A computer-readable storage medium, wherein when instructions in the storage medium are executed by a processor of an electronic device, the electronic device is caused to perform the method according to any one of claims 10 to 14.
